# FASCICULE DE BREVET EUROPEEN

(11) **EP 2 828 486 B1**
(45) Date de publication et mention de la délivrance du brevet: **11.09.2019**
(21) Numéro de dépôt: 13719899.0
(22) Date de dépôt: 19.03.2013
(51) Int. Cl.: F01D 5/28, F01D 17/02, F04D 29/32, G01L 1/24

(54) **DETECTION ET SUIVI D'UN ENDOMMAGEMENT OU D'UN IMPACT D'OBJET ETRANGER SUR UNE SOUFFLANTE D'UN MOTEUR D'AERONEF**
ERKENNUNG UND VERFOLGUNG VON SCHÄDEN ODER AUSWIRKUNGEN EINES FREMDKÖRPERS AUF EINEN FLUGZEUGMOTORBLÄSER
DETECTION AND TRACKING OF DAMAGE OR IMPACT OF A FOREIGN OBJECT ON AN AIRCRAFT ENGINE FAN

(30) Priorité: 20.03.2012 FR 1252489
(43) Date de publication de la demande: 28.01.2015
(60) Demande divisionnaire: 17192223.0
(73) Titulaire: SAFRAN AIRCRAFT ENGINES, 75015 Paris (FR)
(72) Inventeur: TOURIN, David, F-77550 Moissy-Cramayel Cedex (FR); FERDINAND, Pierre, 78800 Houilles (FR); GEREZ, Valerio, F-77550 Moissy-cramayel Cedex (FR); LEROUX, André, F-77550 Moissy-Cramayel Cedex (FR)
(74) Mandataire: David, Alain
(86) Numéro de dépôt international: PCT/FR2013/050581
(87) Numéro de publication internationale: WO 2013/140085

(56) Documents cités:
- EP-A1- 2 369 292
- WO-A1-2005/071382
- WO-A1-2009/065727
- FR-A1- 2 937 079
- FR-A1- 2 951 222
- US-A- 5 844 669
- US-A1- 2009 188 324
- SEAVER M ET AL: "Strain measurements from FBG's embedded in rotating composite propeller blades", PROCEEDINGS OF OSA/OFS 2006, 23 octobre 2006 (2006-10-23), page THD2, XP002512784,

## Description

### Arrière-plan de l'invention

La présente invention se rapporte au domaine des moteurs d'aéronef. La présente invention concerne en particulier la détection de déformations sur les aubes de soufflante résultant par exemple de l'ingestion d'un objet par un turboréacteur d'avion au cours d'un vol.

Au cours d'un vol, il est possible que des corps étrangers ou des pièces détachées du turboréacteur soient ingérés par le turboréacteur et entraînent des détériorations à l'intérieur de celui-ci. Il est possible aussi que des défauts de fabrication entrainent avec le temps un délaminage des aubes. Surtout, un impact d'un objet sur une aube de soufflante risque d'endommager celle-ci.

Dans le cas de détériorations dues à l'ingestion de corps étrangers au turboréacteur (par exemple d'oiseaux), on parle de FOD (pour « *Foreign Object Damage* »). Dans le cas de détériorations dues à l'ingestion de pièces détachées du turboréacteur (par exemple des rivets, boulons, etc.), on parle plutôt de DOD (pour « *Domestic Object Damage* »). L'ingestion de corps étrangers (FOD) constitue la principale cause de retard ou d'annulation d'un vol car, dans la plupart des cas, le choc n'est pas perçu par le pilote pendant le vol et le constat sur l'aube est fait lors du contrôle de l'avion juste avant le redécollage.

Différentes solutions connues existent pour détecter la présence de FOD ou de DOD. Ces solutions visent à permettre de prédire les opérations de contrôle et de maintenance à réaliser afin d'améliorer la disponibilité opérationnelle de l'avion.

Une solution connue pour détecter un FOD est décrite dans le document FR 2 937 079 au nom du Demandeur. Ce document propose d'utiliser les accéléromètres à demeure sur un moteur et de reconnaitre la signature caractéristique d'un impact sur la soufflante au niveau de la forme du signal temporel délivré par ces accéléromètres.

D'autres solutions alternatives sont proposées dans les demandes EP 2369292 et WO 2009/065727.

### Objet et résumé de l'invention

La présente invention vise à améliorer la détection de déformations résultant d'endommagements ou d'impacts sur les aubes d'une soufflante de moteur d'aéronef.

A cet effet, la présente invention propose une soufflante pour moteur d'aéronef selon la revendication 1, et comportant un système de détection d'une déformation résultant de l'impact d'un objet sur ladite soufflante, qui comprend un rotor équipé d'une pluralité d'aubes réalisées en matériau composite incluant des fibres tissées.

Ce système est remarquable en ce qu'au moins une desdites fibres de chacune desdites aubes est une fibre optique comprenant au moins une portion définissant un réseau de Bragg, le système comprenant en outre un émetteur/récepteur relié à ladite fibre optique et configuré pour envoyer un signal optique dans ladite fibre optique et pour recevoir un signal optique de ladite fibre optique et il est prévu un module de détection relié audit émetteur/récepteur pour détecter une déformation sur ladite soufflante lorsque ledit signal optique reçu présente une corrélation avec une signature prédéterminée d'un choc amorti sur une aube à un régime de rotation déterminé et configuré pour déterminer une masse dudit objet en analysant ledit signal optique reçu.

Grâce à ces caractéristiques, il est possible de détecter une déformation résultant d'un endommagement interne ou d'un impact sur la soufflante et la masse de l'objet étranger en analysant le signal reçu de la fibre optique. Il n'est pas nécessaire d'utiliser des accéléromètres ou des capteurs capacitifs ou optiques ou micro ondes, analysés par une technique dite de Tip Timing.

Avantageusement, plusieurs desdites fibres d'au moins une desdites aubes sont des fibres optiques.

Autrement dit, chacune des aubes comprend plusieurs fibres optiques. Dans ce cas, l'analyse des signaux reçus des différentes fibres optiques d'une aube permet de localiser l'endroit où l'aube a été impactée, ce qui permet de prédire les opérations de maintenance.

Dans un mode de réalisation, le module de détection peut être incorporé dans une unité électronique. Dans ce cas, l'unité électronique peut comprendre ledit émetteur/récepteur, le système comprenant en outre un coupleur optique stator/rotor reliant ledit émetteur/récepteur à ladite fibre optique.

En variante, l'émetteur/récepteur peut être porté par le rotor, le module de détection étant configuré pour communiquer avec ledit émetteur/récepteur par une liaison sans fil via une unité de communication.

Dans cette variante, un coupleur optique stator/rotor n'est pas nécessaire.

Le module de détection est de préférence incorporé dans une unité électronique configurée pour mémoriser des informations relatives à la déformation détectée, pour identifier l'aube et pour transmettre lesdites informations de déformation et d'identification à un système de maintenance.

De préférence, des moyens de réception sont prévus pour recevoir lesdites informations de déformation et d'identification et des moyens d'analyse pour appliquer une analyse modale sur chacune desdites informations de déformation, ou de résonances synchrones au régime moteur, afin d'identifier des paramètres modaux relatifs à chaque aube et de suivre l'évolution desdits paramètres afin de détecter des apparitions de défauts et leurs progressions sur les aubes de ladite soufflante.

L'invention propose aussi un moteur d'aéronef incluant un système conforme à l'invention.

L'invention propose aussi un procédé de surveillance d'une soufflante de moteur d'aéronef comprenant un rotor équipé d'une pluralité d'aubes réalisées en matériau composite incluant des fibres tissées.

Ce procédé de surveillance est remarquable en ce qu'il comprend l'émission d'un signal optique dans au moins une desdites fibres de chacune desdites aubes qui est une fibre optique, la réception d'un signal optique provenant de ladite fibre optique et la corrélation entre ledit signal optique reçu et une signature prédéterminée d'un choc amorti sur une aube à un régime de rotation déterminé, afin de détecter une déformation sur ladite soufflante et une masse dudit objet.

Avantageusement, ce procédé peut comprendre en outre la détermination d'une localisation dudit impact dudit objet étranger sur ladite soufflante en analysant ledit signal optique reçu. Il peut aussi comprendre en outre une analyse modale sur chacun desdits signaux ou de résonances synchrones au régime moteur, pour identifier des paramètres modaux relatifs à chaque aube et suivre l'évolution desdits paramètres modaux afin de détecter des apparitions de défauts et leur progression sur lesdites aubes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente schématiquement un système selon un premier mode de réalisation de l'invention, et
- la figure 2 représente schématiquement un système selon un deuxième mode de réalisation de l'invention.

### Description détaillée de modes de réalisation

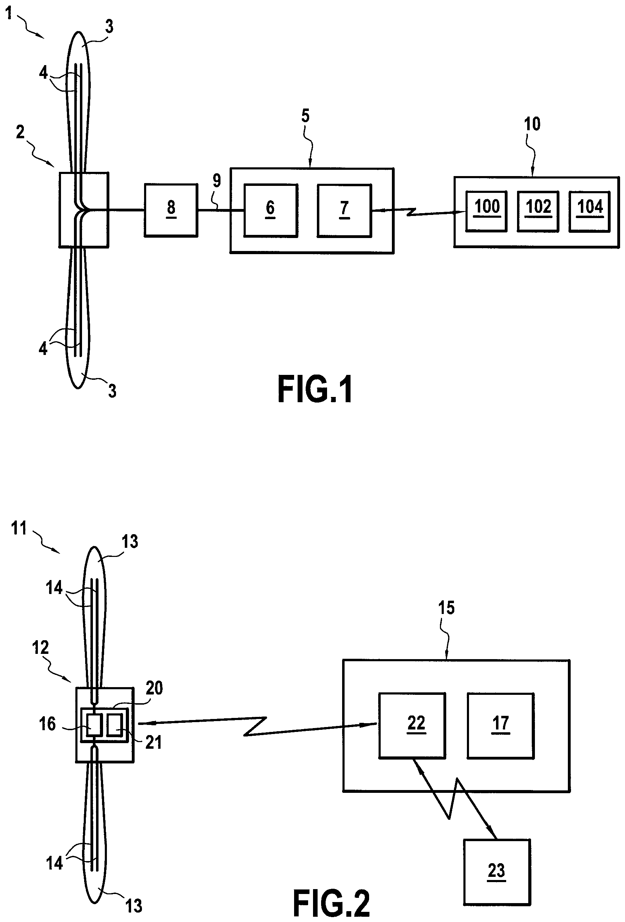

La figure 1 représente schématiquement un système incluant une soufflante 1 pour moteur d'aéronef selon un premier mode de réalisation de l'invention.

La soufflante 1 comprend un rotor 2 équipés d'aubes 3.

Le moteur est par exemple un turboréacteur comprenant la soufflante 1, un compresseur basse pression, un compresseur haute pression, une chambre de combustion, une turbine haute pression et une turbine basse pression. Dans un mode de réalisation, la soufflante 1 est une soufflante non-carénée (moteur de type « *open-rotor* »).

Les aubes 3 sont réalisées en matériau composite tissé. Elles incluent donc des fibres tissées. La réalisation d'une telle aube est connue de l'homme du métier et ne sera donc pas décrite en détails. De plus, l'homme du métier connait des techniques permettant d'intégrer des fibres optiques lors du tissage afin de permettre un contrôle thermique de la résine au moment de l'injection dans le moule. Dans la soufflante 1, les aubes 3 incluent donc des fibres optiques 4.

Le système comprend également une unité électronique 5 comprenant elle-même un émetteur/récepteur 6 et un module de détection 7. Ce système est de préférence en interaction avec une unité de traitement 10 au sol via une transmission de type SATCOM ou GSM en utilisant le système de transmission de données de l'aéronef.

L'émetteur/récepteur 6 est relié, par l'intermédiaire d'une fibre optique 9 et d'un coupleur 8 qui réalise une transmission stator/rotor, aux fibres optiques 4 des aubes 3. L'émetteur/récepteur 6 comprend typiquement un émetteur laser et un récepteur à photodiodes et est apte à envoyer un signal optique dans les fibres optiques 4 et à recevoir un signal optique des fibres optiques 4, par l'intermédiaire du coupleur 8 et de la fibre optique 9.

Le nombre, le positionnement et le type de raccordement des fibres optiques 4 dans une aube 3 peuvent être choisis lors de la conception de l'aube 3 en fonction des zones à surveiller. Par exemple, dans le pied d'aubes, les fibres optiques 4 peuvent être multiplexées.

Le module de détection 7 est apte à commander l'envoi de signaux optiques par l'émetteur/récepteur 6, et à analyser les signaux optiques reçus par l'émetteur/récepteur 6.

L'analyse des signaux est par exemple basée sur l'utilisation des réseaux de Bragg comme détecteur de déplacement. Sans donner une définition précise d'un réseau de Bragg, nous donnons ici l'idée intuitive du principe d'utilisation de cette technologie. Le réseau de Bragg est un réseau photo inscrit dans une fibre optique, plus simplement une portion de fibre optique ayant subi une modification lui donnant de nouvelles propriétés. L'influence du phénomène physique à mesurer (dans ce cas un endommagement interne de l'aube résultant d'un délaminage ou un déplacement causé par un impact) modifie les propriétés du réseau et modifie donc le spectre du signal.

Un impact d'un objet étranger générant un déplacement ou une déformation (au moins temporaire) des aubes 3, on comprend donc que l'analyse des signaux optiques reçus permet de détecter un tel impact. Il en est de même avec un endommagement interne créant une réponse en déformation différente. Plus précisément, l'analyse les signaux optiques reçus permet :
- d'identifier la ou les aubes 3 impactées ou endommagées,
- de localiser ce choc ou cet endommagement sur une aube 3,
- d'estimer la masse de l'objet étranger ayant causé l'impact, et
- d'identifier l'aube (en pratique la paire) à remplacer.

La détection d'un impact ou d'un endommagement d'une aube donnée repose sur la reconnaissance automatique de la forme caractéristique d'un choc amorti en oscillations libres sur le signal provenant du réseau de Bragg de cette même aube. Le module de détection 7 reçoit des informations sur le régime de rotation du moteur (par exemple classiquement par Tip Timing) et des éventuels signaux de déformation de l'aube résultant simplement de la modification, sous le choc ou l'endommagement, des propriétés optiques de la ou les fibres optiques présentes dans cette aube. Pour ce faire, ce module de détection comporte des moyens de corrélation pour corréler ces signaux de déformations avec une signature prédéterminée d'un choc amorti sur une aube au régime de rotation considéré et mémorisée au préalable. Cette signature prédéterminée est, comme il est connu par exemple par le brevet FR2937079, constituée par une pseudo-ondelette ayant une forme d'onde oscillatoire et dont l'amplitude débute à zéro, croit pendant un petit laps de temps jusqu'à une amplitude maximale puis décroit ensuite pour revenir progressivement et alternativement à zéro. Ainsi, tout signal qui présente une corrélation entre un signal de déformation et la signature d'un choc est une indication d'un impact sur la soufflante que celui-ci soit ressenti ou non par le pilote. La localisation de l'aube concernée par l'impact ou l'endommagement se fait par simple identification du réseau de Bragg qui montre le signal issu de la déformation.

La localisation de la zone du choc ou de l'endommagement sur l'aube elle-même est effectuée quant à elle par l'identification de la fibre impactée lorsque, comme il a été dit précédemment, l'aube comporte plusieurs fibres optiques.

L'estimation de la masse est obtenue à partir de l'énergie d'impact et de la vitesse de l'objet étranger ayant impacté l'aube. L'énergie d'impact est obtenue par déduction à partir d'une modélisation préliminaire de cette énergie en fonction de la déformation maximale de l'aube (correspondant à l'amplitude maximale précitée du signal de choc amorti) et la vitesse de l'objet par rapport à l'aube est obtenue à partir de la vitesse de l'aéronef et du régime moteur (en prenant comme hypothèse (vrai au premier ordre) que la vitesse de l'objet par rapport à l'aube est égale à la vitesse de l'aéronef).

Enfin, l'identification de l'aube à inspecter résulte simplement de l'application d'une valeur de seuil aux signaux précédemment détectés pour ne retenir que ceux réellement significatifs et résultant d'un choc de nature à entrainer une défaillance moteur. En effet, ce n'est pas parce que l'aube a été impactée qu'elle est nécessairement endommagée et donc à changer. Par contre, si l'aube présente une amorce de rupture ou un endommagement, pouvant évoluer en délaminage au fur et à mesure que les cycles se cumulent, elle est bien sûr à déposer (pour rebut ou réparation) et à remplacer par paire, c'est-à-dire avec l'aube lui faisant face du fait de leurs moments statiques très proches.

Les informations précitées sont mémorisées par l'unité électronique 5 qui peut être intégrée dans un boitier spécifique ou, du fait que les traitements embarqués sont limités aux signaux issus des déformation, faire partie d'un boitier existant, comme l'EMU (Engine Monitoring Unit), puis transmises au sol à un système de maintenance ou à l'unité de traitement 10 pour traitement complémentaire.

L'unité de traitement 10 comporte des moyens de réception 100, des moyens d'analyse 102, et des moyens de stockage 104 de type bases de données. Les moyens de réception sont configurés pour recevoir les signaux issus des déformations depuis le module embarqué de détection 7 de l'unité électronique 5 qui est dès lors bien entendu pourvu de moyens de transmission correspondant. Après la réception des signaux, les moyens d'analyse appliquent une analyse modale sur chacun de ces signaux afin d'identifier des paramètres modaux relatifs à chaque aube impactée. L'analyse modale (classiquement de type Prony ou équivalent) permet de déterminer la fréquence propre et l'amortissement sur chaque déformation. Les moyens d'analyse procèdent ensuite à la validation des paramètres modaux identifiés pour chaque aube avant de les enregistrer dans une base de données propre à la soufflante 1. Les moyens d'analyse sont également configurés pour suivre l'évolution des paramètres modaux consécutivement à un choc (pseudo-fréquences propres) ou à la réponse de l'aube à une excitation harmonique (fréquences des résonances, synchronisées sur des multiples du régime moteur) afin de détecter des éventuelles évolutions (glissements fréquentiels, par exemple) révélatrices de la progression des endommagements sur les aubes de la soufflante. En particulier, ces moyens d'analyse comparent les paramètres modaux à une base de données d'aubes saines afin d'estimer les glissements en fréquence et/ou amortissement. Cette comparaison est réalisée de préférence d'impact en impact pour les pseudo fréquences propres, ou cycle moteur après cycle moteur pour les résonances synchrones, (via un algorithme de trend monitoring par exemple) pour analyser l'évolution des paramètres modaux, le nombre d'impacts et éventuellement d'autres caractéristiques relatives aux impacts. Ainsi, un glissement faible et progressif indique l'évolution du défaut et une variation brusque par rapport à un état sain de référence est une indication de l'apparition soudaine d'un défaut. Au cas où un défaut est détecté, les moyens d'analyse 102 génèrent un message ou un avis de maintenance du moteur comportant les données d'identification de(s) l'aube(s) défectueuse(s).

L'unité électronique 5 présente par exemple l'architecture matérielle d'un ordinateur et comprend notamment un microprocesseur, une mémoire non-volatile et une mémoire volatile. Dans ce cas, le module de détection 7 peut correspondre à l'exécution, par le microprocesseur, d'un programme d'ordinateur mémorisé dans la mémoire non-volatile, en utilisant la mémoire volatile.

L'unité électronique 5 peut être spécifique à la surveillance des aubes 3 et à la détection de leurs éventuelles dégradations. En variante, l'unité électronique 5 peut effectuer d'autres fonctions de surveillance et/ou de commande dans le moteur.

La figure 2 représente un système incluant une soufflante 11 pour moteur d'aéronef selon un deuxième mode de réalisation de l'invention.

Les éléments identiques ou similaires à des éléments du système de la figure 1 sont désignés par le même numéro de référence, augmenté de 10, et ne sont plus décrit en détail.

Ainsi, la soufflante 11 comprend un rotor 12 équipés d'aubes 13 incluant des fibres optiques 14, et le système comprend une unité électronique 15 incluant un module de détection 17.

Le système comprend également une unité électronique 20 auxiliaire portée par le rotor 12. L'unité électronique 20 comprend un émetteur/récepteur 16 reliés aux fibres optiques 14 et une unité de communication 21 apte à communiquer par liaison sans fil (liaison radiofréquences par exemple) avec une unité de communication 22 de l'unité électronique 15. L'unité de communication 22 peut également assurer la liaison avec une unité de traitement 23 déportée au sol et chargée de l'analyse modale et du suivi des paramètres modaux en résultant, afin de détecter des irrégularités dans leur évolution révélatrices de défauts sur les aubes de la soufflante et de délivrer alors un avis de maintenance du moteur.

Par rapport au mode de réalisation de la figure 1, le système de la figure 2 ne nécessite pas de coupleur optique stator/rotor car l'émetteur/récepteur 16 est porté par le rotor.

## Revendications

1. Soufflante (1, 11) pour moteur d'aéronef comprenant un rotor (2, 12) équipé d'une pluralité d'aubes (3, 13) réalisées en matériau composite incluant des fibres tissées et un système de détection de déformations résultant de l'impact d'un objet sur ladite soufflante, au moins une desdites fibres de chacune desdites aubes (3, 13) étant une fibre optique (4, 14) comprenant au moins une portion définissant un réseau de Bragg, la soufflante comprenant en outre un émetteur/récepteur (6, 16) relié à ladite fibre optique (4, 14) et configuré pour envoyer un signal optique dans ladite fibre optique (4, 14) et pour recevoir en réponse de ladite fibre optique (4, 14) un signal optique, **caractérisée en ce qu'**elle comporte en outre un module de détection (7, 17) relié audit émetteur/récepteur et configuré pour détecter une déformation sur ladite soufflante (1, 11) lorsque ledit signal optique reçu présente une corrélation avec une signature prédéterminée d'un choc amorti sur une aube à un régime de rotation déterminé et configuré pour déterminer une masse dudit objet en analysant ledit signal optique reçu.

2. Soufflante selon la revendication 1, dans laquelle ledit système est configuré pour détecter comme objet impactant ladite soufflante des corps étrangers ou des pièces détachées d'un turboréacteur.

3. Soufflante selon la revendication 1, dans laquelle plusieurs desdites fibres de chacune desdites aubes (3, 13) sont des fibres optiques (4, 14).

4. Soufflante selon la revendication 3, dans laquelle ledit module de détection est configuré pour déterminer une localisation de l'impact dudit objet en analysant le signal optique reçu.

5. Soufflante selon l'une quelconque des revendications 1 à 4, comprenant en outre un coupleur (8) optique stator/rotor reliant ledit émetteur/récepteur (6) à ladite fibre optique (4).

6. Soufflante selon l'une quelconque des revendications 1 à 4, dans laquelle ledit émetteur/récepteur (16) est porté par le rotor (12), le module de détection (17) étant configuré pour communiquer avec ledit émetteur/récepteur (16) par une liaison sans fil via une unité de communication (22).

7. Soufflante selon l'une quelconque des revendications 1 à 6, dans laquelle le module de détection (7, 17) est incorporé dans une unité électronique (5, 15) configurée pour mémoriser des informations relatives à la déformation détectée, pour identifier l'aube et pour transmettre lesdites informations de déformation et d'identification à un système de maintenance.

8. Soufflante selon la revendication 7, comprenant en outre des moyens de réception (100) pour recevoir lesdites informations de déformation et d'identification et des moyens d'analyse (102, 104) pour appliquer une analyse modale sur chacune desdites informations de déformation, ou de résonances synchrones au régime moteur, afin d'identifier les paramètres modaux relatifs à chaque aube et de suivre l'évolution desdits paramètres afin de détecter des apparitions de défauts et leurs progressions sur les aubes de ladite soufflante.

9. Moteur d'aéronef incluant une soufflante selon l'une quelconque des revendications 1 à 8.

10. Procédé de détection d'une déformation résultant de l'impact d'un objet sur une soufflante (1, 11) selon la revendication 1, ledit procédé comprenant l'émission d'un signal optique dans au moins une desdites fibres de chacune desdites aubes (3, 13) qui est une fibre optique (4, 14) et la réception d'un signal optique provenant de ladite fibre optique (4, 14), **caractérisé en ce qu'**il comporte en outre, la corrélation entre le signal optique reçu et une signature prédéterminée d'un choc amorti sur une aube à un régime de rotation déterminé, afin de détecter une déformation sur ladite soufflante (1, 11) et une masse dudit objet.

11. Procédé de détection selon la revendication 10, dans lequel ledit système détecte comme objet impactant ladite soufflante des corps étrangers ou des pièces détachées d'un turboréacteur.

12. Procédé de détection selon la revendication 11, comprenant en outre la détermination d'une localisation dudit impact dudit objet sur ladite soufflante en analysant ledit signal optique reçu.

13. Procédé de détection selon la revendication 10, comprenant en outre une analyse modale sur chacun desdits signaux ou de résonances synchrones au régime moteur pour identifier des paramètres modaux relatifs à chaque aube et suivre l'évolution desdits paramètres modaux afin de détecter des apparitions de défauts et leurs progressions sur lesdites aubes.

## Patentansprüche

1. Gebläse (1, 11) für ein Flugzeugtriebwerk, umfassend einen Rotor (2, 12), der mit einer Vielzahl von Schaufeln (3, 13), welche aus gewebte Fasern enthaltendem Verbundwerkstoff gefertigt sind, ausgestattet ist, und ein System zur Erfassung von Verformungen, welche aus dem Aufschlag eines Objektes auf das Gebläse resultieren, wobei wenigstens eine der Fasern einer jeden der Schaufeln (3, 13) eine optische Faser (4, 14) ist, die wenigstens einen ein Bragg-Gitter definierenden Abschnitt umfasst, wobei das Gebläse ferner einen Sender/Empfänger (6, 16) umfasst, der mit der optischen Faser (4, 14) verbunden und dazu ausgelegt ist, ein optisches Signal in die optische Faser (4, 14) zu senden und als Antwort von der optischen Faser (4, 14) ein optisches Signal zu empfangen, **dadurch gekennzeichnet, dass** es ferner ein Erfassungsmodul (7, 17) umfasst, das mit dem Sender/Empfänger verbunden und dazu ausgelegt ist, eine Verformung an dem Gebläse (1, 11) zu erfassen, wenn das empfangene optische Signal eine Korrelation mit einer vorbestimmten Signatur eines gedämpften Stoßes auf eine Schaufel bei einer bestimmten Drehzahl aufweist, und dazu ausgelegt ist, eine Masse des Objektes durch Analysieren des empfangenen optischen Signals zu bestimmen.

2. Gebläse nach Anspruch 1, bei dem das System dazu ausgelegt ist, als Objekt, welches auf das Gebläse auftrifft, Fremdkörper oder von einem Turbostrahltriebwerk gelöste Teile zu erfassen.

3. Gebläse nach Anspruch 1, bei dem mehrere der Fasern von jeder der Schaufeln (3, 13) optische Fasern (4, 14) sind.

4. Gebläse nach Anspruch 3, bei dem das Erfassungsmodul dazu ausgelegt ist, einen Ort des Aufschlags des Objektes durch Analysieren des empfangenen optischen Signals zu bestimmen.

5. Gebläse nach einem der Ansprüche 1 bis 4, ferner umfassend einen optischen Stator/Rotor-Koppler (8), der den Sender/Empfänger (6) mit der optischen Faser (4) verbindet.

6. Gebläse nach einem der Ansprüche 1 bis 4, bei dem der Sender/Empfänger (16) von dem Rotor (12) getragen wird, wobei das Erfassungsmodul (17) dazu ausgelegt ist, mit dem Sender/Empfänger (16) durch eine Drahtlosverbindung über eine Kommunikationseinheit (22) zu kommunizieren.

7. Gebläse nach einem der Ansprüche 1 bis 6, bei dem das Erfassungsmodul (7, 17) in eine elektronische Einheit (5, 15) eingebaut ist, die dazu ausgelegt ist, Informationen bezüglich der erfassten Verformung zu speichern, um die Schaufel zu identifizieren und um die Verformungs- und Identifikationsinformationen an ein Wartungssystem zu übermitteln.

8. Gebläse nach Anspruch 7, ferner umfassend Empfangsmittel (100), um die Verformungs- und Identifikationsinformationen zu empfangen, sowie Analysemittel (102, 104), um eine Modalanalyse auf jede der Verformungsinformationen oder von Synchronresonanzen bei der Triebwerkdrehzahl anzuwenden, um die Modalparameter bezüglich jeder Schaufel zu identifizieren und die Entwicklung der Parameter zu verfolgen, um das Auftreten von Defekten und deren Fortschreiten an den Schaufeln des Gebläses zu erfassen.

9. Flugzeugtriebwerk, das ein Gebläse nach einem der Ansprüche 1 bis 8 enthält.

10. Verfahren zum Erfassen einer Verformung, die aus dem Aufschlag eines Objektes auf ein Gebläse (1, 11) nach Anspruch 1 resultiert, wobei das Verfahren das Senden eines optischen Signals in wenigstens eine der Fasern einer jeden der Schaufeln (3, 13), welche eine optische Faser (4, 14) ist, sowie das Empfangen eines optischen Signals von der optischen Fasern (4, 14) umfasst, **dadurch gekennzeichnet, dass** es ferner die Korrelation zwischen dem empfangenen optischen Signal und einer vorbestimmten Signatur eines gedämpften Stoßes auf eine Schaufel bei einer bestimmten Drehzahl aufweist, um eine Verformung an dem Gebläse (1, 11) und eine Masse des Objektes zu erfassen.

11. Erfassungsverfahren nach Anspruch 10, bei dem das System als Objekt, welches auf das Gebläse auftrifft, Fremdkörper oder von einem Turbostrahltriebwerk gelöste Teile erfasst.

12. Erfassungsverfahren nach Anspruch 11, ferner umfassend die Bestimmung eines Ortes des Aufschlags des Objektes auf das Gebläse durch Analysieren des empfangenen optischen Signals.

13. Erfassungsverfahren nach Anspruch 10, ferner umfassend eine Modalanalyse an jedem der Signale oder von Synchronresonanzen bei der Triebwerkdrehzahl, um Modalparameter bezüglich jeder Schaufel zu identifizieren und die Entwicklung der Modalparameter zu verfolgen, um das Auftreten von Defekten und deren Fortschreiten an den Schaufeln zu erfassen.

## Claims

1. A fan (1, 11) for an aeroengine, the fan comprising a rotor (2, 12) having a plurality of blades (3, 13) made of composite material including woven fibers and a system for detecting deformation resulting from an impact of an object against said fan, at least one of said fibers in each of said blades (3, 13) being an optical fiber (4, 14) including at least one portion defining a Bragg grating, the fan further comprising a transceiver (6, 16) connected to said optical fiber (4, 14) and configured for sending an optical signal into said optical fiber (4, 14) and for receiving an optical signal in response from said optical fiber (4, 14), the fan being **characterized in that** it further comprises a detector module (7, 17) connected to said transceiver and configured to detect a deformation of said fan (1, 11) when said received optical signal presents correlation with a predetermined signature of a damped impact on a blade at a determined speed of rotation and configured for determining a mass of said object by analyzing the received optical signal.

2. A fan according to claim 1, wherein said system is configured for detecting as object impacting said fan foreign bodies or pieces detached from the engine.

3. A fan according to claim 1, wherein a plurality of said fibers in each of said blades (3, 13) are optical fibers (4, 14).

4. A fan according to claim 3, wherein said detector module is configured for determining a location for the impact of said object by analyzing the received optical signal.

5. A fan according to any one of claims 1 to 4, further including a stator-to-rotor optical coupler (8) connecting said transceiver (6) to said optical fiber (4) .

6. A fan according to any one of claims 1 to 4, wherein said transceiver (16) is carried by the rotor (12), the detector module (17) being configured for communicating with said transceiver (16) by a wireless connection via a communications unit (22).

7. A fan according to any one of claims 1 to 6, wherein the detector module (7, 17) is incorporated in an electronic unit (5, 15) configured for storing information relating to the detected deformation, for identifying the blade, and for transmitting said deformation and identification information to a maintenance system.

8. A fan according to claim 7, further including receiver means (100) for receiving said deformation and identification information and analysis means (102, 104) for subjecting said deformation information to modal analysis or to analysis of resonances synchronous with the engine speed, in order to identify modal parameters relating to each blade and in order to track variation of said parameters so as to detect the appearance of defects and their progress over the blades of said fan.

9. An aeroengine including a fan according to any one of claims 1 to 8.

10. A method of detecting a deformation resulting from an impact of an object against a fan (1, 11) according to claim 1, the method comprising sending an optical signal into at least one of said fibers in each of said blades (3, 13), which fiber is an optical fiber (4, 14) and receiving an optical signal coming from said optical fiber (4, 14), **characterized in that** it further comprises correlating the received optical signal and a predetermined signature for a damped impact against a blade at a determined speed of rotation in order to detect a deformation of said fan (1, 11) and a mass of said object.

11. A detection method according to claim 10, wherein said system detects as object impacting said fan foreign bodies or pieces detached from the engine.

12. A detection method according to claim 11, further including the determination of a location for said impact of said object against said fan by analyzing said received optical signal.

13. A detection method according to claim 10, further including subjecting each of said signals to modal analysis or to analysis of resonances synchronous with the engine speed, in order to identify modal parameters relating to each blade and in order to track variation in said modal parameters so as to detect the appearance of defects and their progress over said blades.
